# EUROPÄISCHE PATENTSCHRIFT

(11) **EP 0 469 672 B1**
(45) Veröffentlichungstag und Bekanntmachung des Hinweises auf die Patenterteilung: **02.03.1994**
(21) Anmeldenummer: 91201928.8
(22) Anmeldetag: 23.07.1991
(51) Int. Cl.: B23C 5/22

(54) **Rotierendes, spanabhebendes Werkzeug**
Rotating cutting tool
Outil de coupe rotatif

(30) Priorität: 30.07.1990 AT 1589/90
(43) Veröffentlichungstag der Anmeldung: 05.02.1992
(73) Patentinhaber: PLANSEE TIZIT GESELLSCHAFT M.B.H., 6600 Reutte/Tirol (AT)
(72) Erfinder: Falger, Friedrich, Dipl.-Ing., A-6600 Ehenbichl (AT)
(74) Vertreter: Lohnert, Wolfgang, Dr.

(56) Entgegenhaltungen:
- EP-A- 0 039 539
- EP-A- 0 350 938

## Beschreibung

Die Erfindung betrifft ein rotierendes, spanabhebendes Werkzeug für die Hochgeschwindigkeitsbearbeitung mit einem oder mehreren auf einem Werkzeuggrundkörper oder einer Werkzeugkassette befestigten auswechselbaren Schneideinsätzen und mit am Werkzeuggrundkörper und am Schneideinsatz befindlichen ersten und zweiten Anlageflächen mit einem konvexen bzw. konkaven Zentralbereich zur Aufnahme der an den Schneideinsätzen auftretenden Fliehkräfte durch den Werkzeuggrundkörper.

Bei rotierenden, spanabhebenden Werkzeugen für die Hochgeschwindigkeitsbearbeitung, wie bei Hochgeschwindigkeitsfräsern oder Hochgeschwindigkeitsbohrern, treten hohe Drehzahlen auf, die bis zu 100.000 Umdrehungen pro Minute betragen können. Durch diese hohen Drehzahlen treten am Werkzeug sehr hohe Fliehkräfte auf, die die Werkzeugteile aufs Äußerste beanspruchen. Aufgrund dieser großen Fliehkräfte ist es nicht mehr möglich, Wendeschneidplatten mit einer ebenen Auflagefläche nur kraftschlüssig über eine Klemmbefestigung oder über Schrauben mit dem Werkzeuggrundkörper oder einer Werkzeugkassette zu verbinden, da die zulässige Beanspruchung der Befestigungsmittel durch die Fliehkräfte überschritten werden.

Man hat daher in der Vergangenheit für derartige Einsatzbedingungen versucht, eine spezifische Verbindung zwischen Wendeschneidplatten und Werkzeuggrundkörper oder Werkzeugkassette zu schaffen, um über diese spezifische Verbindung den Großteil der Fliehkräfte aufzunehmen und die Beanspruchung der Befestigungsmittel herabzusetzen.

Bekannt geworden sind dabei Wendeschneidplatten-Formen, deren Anlagefläche eine Feder aufweist, die in eine entsprechende Nut der Anlagefläche des Werkzeuggrundkörpers eingreift. Eine derartige Konstruktion führt jedoch zu sehr hohen Beanspruchungen des Werkzeuggrundkörpers, vor allem im Bereich des Nutengrundes durch Kerbwirkung.

Bei einer anderen bekannten Ausführungsform weisen die Auflageflächen der Wendeschneidplatten eine V-förmige Anlagefläche auf, die in eine entsprechende Nut des Werkzeuggrundkörpers eingreift. Nachteilig bei einer derartigen Ausführung ist, daß die Wendeschneidplatten bei den hohen Fliehkräften nur unzureichend und nicht genau definiert in der Nut positioniert sind und seitlich verkippen können.

In der DE-OS 35 33 125 ist eine weitere Ausführung einer formschlüssigen Verbindung zwischen den Wendeschneidplatten und dem Werkzeuggrundkörper beschrieben. Nach dieser Vorveröffentlichung weisen die Anlageflächen der Wendeschneidplatten und die Anlageflächen des Werkzeugkörpers miteinander in Eingriff stehende Verzahnungen auf, deren Zähne parallel zur Fräserachse verlaufen und einen bestimmten Flankenwinkel aufweisen. Der Nachteil einer derartigen Ausführung liegt darin, daß durch die Vielzahl der Anlagekontakte eine Überbestimmung vorliegt, wodurch keine eindeutige Positionierung der Wendeschneidplatte im Werkzeuggrundkörper mehr gewährleistet ist.

Die Aufgabe der Erfindung ist es daher, ein rotierendes, spanabhebendes Werkzeug für die Hochgeschwindigkeitsbearbeitung zu schaffen, bei dem die Schneideinsätze mit dem Werkzeuggrundkörper oder der Werkzeugkassette eine formschlüssige Verbindung aufweisen, ohne daß es zu einer Überbestimmung in der Anlage kommt, so daß eine definierte Positionierung der Schneideinsätze ermöglicht ist und ohne daß mechanische Überbeanspruchungen an den Schneideinsätzen, Befestigungselementen oder an Teilen des Werkzeuggrundkörpers auftreten.

Erfindungsgemäß wird dies dadurch erreicht, daß zumindest einseitig an den Zentralbereich ebene Randbereiche angrenzen und daß im Schnitt senkrecht zur Achse des Werkzeugs gesehen, Werkzeuggrundkörper und Schneideinsatz in drei Anlagepunkten auf beiden Anlageflächen Kontakt miteinander haben, wobei zwei Anlagepunkte innerhalb der Zentralbereiche liegen und der dritte Anlagepunkt innerhalb der ebenen Randbereiche liegt und daß der konvexe Zentralbereich der ersten Anlagefläche zumindest im Bereich der zwei Anlagepunkte der Abschnitt der Mantelfläche eines Kreiszylinders ist, der sich zumindest annähernd in Richtung der Rotationsachse über den gesamten Zentralbereich erstreckt.

Durch die erfindungsgemäße Ausgestaltung wird erreicht, daß die Schneideinsätze gegenüber dem Werkzeuggrundkörper entlang der Zentralbereiche der gemeinsamen Anlageflächen verschwenkt werden können, so daß auch bei Fertigungstoleranzen ein ebener Randbereich des Schneideinsatzes sicher zur Anlage am entsprechenden ebenen Randbereich des Werkzeuggrundkörpers gebracht werden kann. Dadurch wird ein exakter, spielfreier Formschluß mit einer definierten Positionierung der Schneideinsätze gewährleistet. Die auftretenden Flieh- und Zerspanungskräfte werden ohne unzulässige Überbeanspruchung der einzelnen Werkzeugkomponenten und ohne Lageveränderung der Schneideinsätze aufgenommen.
Während der konvexe Zentralbereich der Anlagefläche zumindest im Bereich der zwei Anlagepunkte immer als Abschnitt der Mantelfläche eines Kreiszylinders ausgeführt ist, kann die Ausgestaltung des konkaven Zentralbereiches vielgestaltig sein. So kann der konkave Zentralbereich ebenfalls ein Teil der Mantelfläche eines Kreiszylinders sein, er kann aber ebenso der Abschnitt eines ellipsenförmigen, parabelförmigen oder hyperbelförmigen Zylinders oder eine U- oder V-förmige Nut sein.
Der konvexe Zentralbereich kann entweder im Schneideinsatz oder im Werkzeuggrundkörper bzw. in der Werkzeugkassette eingearbeitet sein.
Die ebenen Randbereiche können an einer oder beiden Seiten des konvexen bzw. konkaven Zentralbereiches angrenzen.
Die Schneideinsätze können als Wegwerfeinsätze oder als Wendeschneidplatten mit oder ohne Mittelloch zur Befestigung mittels Klemmschrauben oder über Klemmpratzen ausgeführt sein.

Die Anlageflächen der Schneideinsätze können in erfindungsgemäßer Ausgestaltung einfach und billig durch Direktpressen und ggf. einfachen Formschliff hergestellt werden. Desgleichen können die Anlageflächen im Werkzeuggrundkörper bzw. in der Werkzeugkassette mit einfachen technischen Mitteln und kostengünstig gefräst, geschliffen oder erodiert werden.
Die erfindungsgemäßen Werkzeuge können rotierend bei hohen Drehzahlen zum Hochgeschwindigkeitsfräsen oder Hochgeschwindigkeitsbohren eingesetzt werden.

Besonders vorteilhaft ist es, wenn Wendeschneidplatten und Werkzeuggrundkörper bzw. Werkzeugkassette so ausgeführt werden, daß zwei Anlagepunkte innerhalb des konvexen Zentralbereiches sowie im unmittelbaren Übergang des konkaven Zentralbereiches zu den ebenen Randbereichen liegen.
Auf diese Weise wird eine äußerst stabile definierte Anlage zwischen Wendeschneidplatte und Werkzeuggrundkörper erreicht.

Weiters ist es vorteilhaft, wenn auch der konkave Zentralbereich der Anlagefläche der Abschnitt der Mantelfläche eines Kreiszylinders ist, wobei der Radius der Mantelfläche kleiner ist als der Radius der Mantelfläche des konvexen Zentralbereiches der Anlagefläche.
Durch diese spezielle Ausgestaltung wird eine besonders einfache und kostengünstige Herstellung der Zentralbereiche erreicht.

Als weitere bevorzugte Ausgestaltung der Erfindung hat es sich bewährt, wenn der konvexe Zentralbereich der Anlagefläche an den Schneideinsätzen ausgeführt ist. Dadurch wird die Gefahr eines Schneideinsatz-Bruches verringert, die bei Schneideinsätzen aufgrund der Abmessungen und materialbedingt wesentlich größer ist als beim Werkzeuggrundkörper.

Weiters hat es sich als vorteilhaft herausgestellt, wenn die Größe der Überhöhung h der konvexen bzw. konkaven Zentralbereiche der Anlageflächen in einem Bereich zwischen 1/5 und 1/10 des Durchmesserbetrages des konvexen Zentralbereiches der Anlagefläche liegt. Dadurch wird auch unter extremen Belastungen ein sicherer Formschluß gewährleistet.

Vorteilhaft zur sicheren Klemmung der Schneideinsätze ist es auch, wenn diese ein Mittelloch aufweisen und über Klemmschrauben mit dem Werkzeuggrundkörper oder der Werkzeugkassette verschraubt sind, wobei die Längsachse des Mittelloches und die Längsachse der Gewindebohrung im Werkzeuggrundkörper unter einem Winkel gegeneinander geneigt sind. Auf diese Art und Weise wird erreicht, daß die Schneideinsätze auch unter Zerspanungsbedingungen definiert an drei Punkten anliegen. Dabei ist es selbstverständlich vorteilhaft die Neigung so zu wählen, daß die ebenen Randbereiche zur Anlage kommen, die bei den Schneidkanten der Schneideinsätze liegen, die sich im Schneideinsatz befinden.

Die Schneideinsätze für ein erfindungsgemäßes Werkzeug sind vorteilhafterweise jeweils als Mittelloch-Wendeschneidplatte ausgeführt, deren Anlagefläche im Schnitt gesehen jeweils zwei seitliche, ebene Randbereich aufweist und wobei der konvexe Zentralbereich angrenzend an die ebenen Randbereiche, zwei Mantelflächenabschnitte eines Kreiszylinders aufweist, die in eine zentrale ebene Fläche übergehen.

Über die kreiszylinderförmigen Mantelabschnitte wird eine ausreichende Möglichkeit der Verschwenkung der Wendeschneidplatte gegenüber dem Werkzeuggrundkörper zur Herstellung einer sicheren Dreipunktanlage erreicht, während durch die zentrale Fläche gleichzeitig eine gute Auflagefläche zum umfangseitigen Schleifen bei der Herstellung der Wendeschneidplatte geschaffen ist.

Die Erfindung wird im folgenden anhand von Zeichnungen näher erläutert.

Es zeigen:

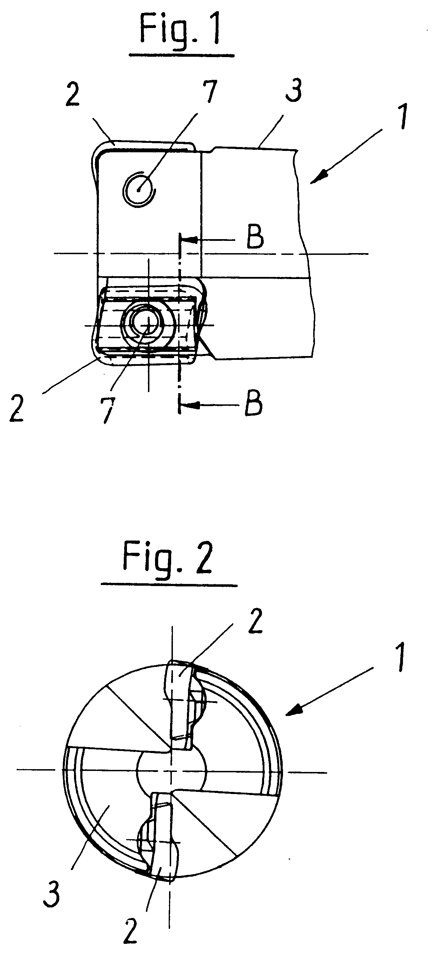

- Figur 1: den Kopfteil eines erfindungsgemäßen Werkzeuges in Seitenansicht
- Figur 2: das Werkzeug nach Figur 1 in Stirnansicht

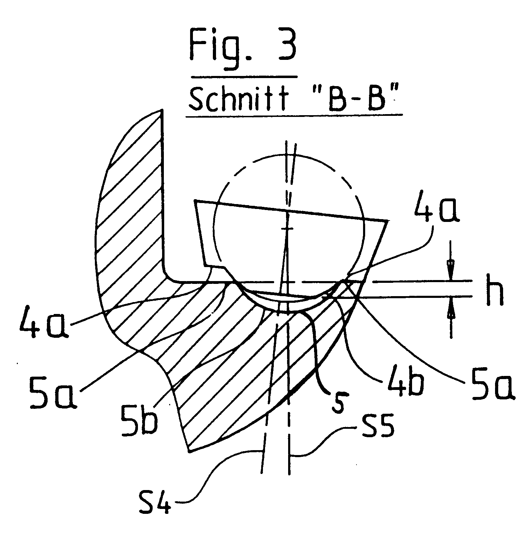

- Figur 3: die Prinzipskizze eines erfindungsgemäßen Wendeschneidplattensitzes im Schnitt B-B nach Figur 1

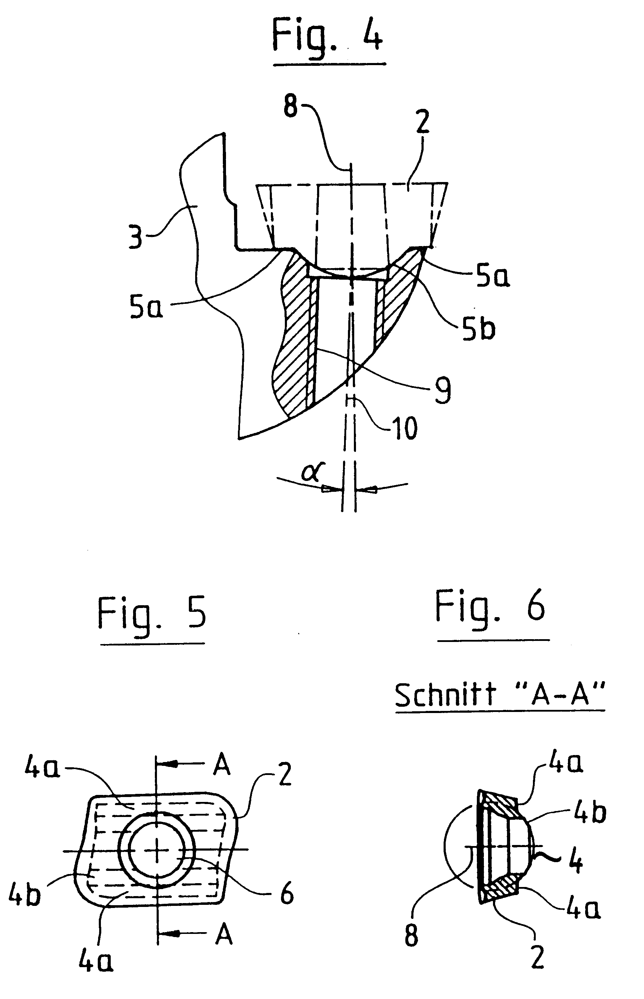

- Figur 4: den vergrößerten Ausschnitt eines Wendeschneidplattensitzes des Werkzeuges nach Figur 1 und 2 teilweise geschnitten
- Figur 5: eine vergrößert dargestellte Wendeschneidplatte des erfindungsgemäßen Werkzeuges nach Figur 1 und 2
- Figur 6: die Wendeschneidplatte nach Figur 5 im Schnitt A-A

Das erfindungsgemäße spanabhebende Werkzeug für die Hochgeschwindigkeitsbearbeitung besteht aus einem schaftförmigen Grundkörper -1- sowie zwei Mittelloch-Wendeschneidplatten -2-, die in Ausnehmungen des Grundkörpers -1- durch Schrauben -7- befestigt sind.

Die Anlagefläche -4- der Wendeschneidplatten -2- besteht aus einem konvexen Zentralbereich -4b-, der als Teil der Mantelfläche eines Kreiszylinders ausgebildet ist sowie aus zwei seitlichen ebenen Randbereichen -4a-, die senkrecht zur Symmetrieachse -S4- des konvexen Zentralbereiches -4b- angeordnet sind. Die entsprechende Anlagefläche -5- des Werkzeuggrundkörpers -3- besteht aus einem konkaven Zentralbereich -5b-, der ebenfalls als Teil der Mantelfläche eines Kreiszylinders ausgebildet ist und aus zwei seitlichen, ebenen Randbereichen -5a-, die senkrecht zur Symmetrieachse -S5- des konkaven Zentralbereiches -5b- angeordnet sind. Der Radius des konkaven Zentralbereiches -5b- dieser Anlagefläche -5- ist geringfügig kleiner als der Radius des konvexen Zentralbereiches -4b- der Anlagefläche -4- der Wendeschneidplatten -2-. Dadurch wird erreicht, daß der konvexe Zentralbereich -4b- der Anlagefläche -4- jeder Wendeschneidplatte -2-definiert an zwei punktförmigen bzw. kleinflächigen Stellen am unmittelbaren Übergang des konkaven Zentralbereiches -5b- zu den seitlichen ebenen Randbereichen -5a- des Werkzeuggrundkörpers -3- anliegt. Bei einem seitlichen Verkippen der Wendeschneidplatte -2- liegt auch noch ein ebener Randbereich -4a- der Kontaktfläche -4- der Wendeschneidplatte -2- am entsprechenden ebenen Randbereich -5a- der Anlagefläche -5- des Werkzeuggrundkörpers -3- an. Wichtig dabei ist, daß das Verkippen der Wendeschneidplatte -2- derart erfolgt, daß der am Werkzeug näher am Umfang liegende ebene Randbereiche -4a- zur Anlage am ebenen Randbereich -5a- der Anlagefläche -5- des Werkzeuggrundkörpers -3- kommt. Um den Kippeffekt in dieser Richtung zu unterstützen ist die Gewindebohrung -9- im Werkzeuggrundkörper -3- zur Befestigung der Mittelloch-Wendeschneidplatte -2- mit einer Schraube -7- derart eingearbeitet, daß die Längsachse -10- der Gewindebohrung -9- zur Längsachse -8- des Mittelloches der Wendeschneidplatte -2- unter einem spitzen Winkel α vom Umfang des Werkzeuges nach innen geneigt verläuft. Wird die Wendeschneidplatte -2- durch die Schraube -7- am Werkzeuggrundkörper -3- befestigt, ergibt sich eine definierte sichere 3-Punkt-Anlage, die auch während des Zerspanungsvorganges erhalten bleibt.

## Patentansprüche

1. Rotierendes, spanabhebendes Werkzeug (1) für die Hochgeschwindigkeitsbearbeitung mit einem oder mehreren auf einem Werkzeuggrundkörper (3) oder einer Werkzeugkassette befestigten, auswechselbaren Schneideinsätzen (2) und mit am Werkzeuggrundkörper (3) und am Schneideinsatz (2) befindlichen ersten und zweiten Anlageflächen (4;5) mit einem konvexen bzw. konkaven Zentralbereich (4b;5b) zur Aufnahme der an den Schneideinsätzen (2) auftretenden Fliehkräfte durch den Werkzeuggrundkörper (3),
**dadurch gekennzeichnet**, daß zumindest einseitig an den Zentralbereich ebene Randbereiche (4a;5a) angrenzen und daß im Schnitt senkrecht zur Achse des Werkzeugs gesehen, Werkzeuggrundkörper (3) und Schneideinsatz (2) in drei Anlagepunkten auf beiden Anlageflächen (4;5) Kontakt miteinander haben, wobei zwei Anlagepunkte innerhalb der Zentralbereiche (4b;5b) liegen und der dritte Anlagepunkt innerhalb der ebenen Randbereiche (4a;5a) liegt und daß der konvexe Zentralbereich (4b) der ersten Anlagefläche (4) zumindest im Bereich der zwei Anlagepunkte der Abschnitt der Mantelfläche eines Kreiszylinders ist, der sich zumindest annähernd in Richtung der Rotationsachse über den gesamten Zentralbereich (4b) erstreckt.

2. Werkzeug für die Hochgeschwindigkeitsbearbeitung nach Anspruch 1, dadurch gekennzeichnet, daß die zwei Anlagepunkte innerhalb des konvexen Zentralbereiches (4b) sowie im unmittelbaren Übergang des konkaven Zentralbereiches (5b) zu den ebenen Randbereichen (5a) liegen.

3. Werkzeug für die Hochgeschwindigkeitsbearbeitung nach Anspruch 1 oder 2, dadurch gekennzeichnet, daß auch der konkave Zentralbereich (5b) der zweiten Anlagefläche (5) der Abschnitt der Mantelfläche eines Kreiszylinders ist, wobei der Radius der Mantelfläche kleiner ist als der Radius der Mantelfläche des konvexen Zentralbereiches (4b) der ersten Anlagefläche (4).

4. Werkzeug für die Hochgeschwindigkeitsbearbeitung nach einem der Ansprüche 1 - 3, dadurch gekennzeichnet, daß der konvexe Zentralbereich (4b) der ersten Anlagefläche (4) an den Schneideinsätzen (2) ausgeführt ist.

5. Werkzeug für die Hochgeschwindigkeitsbearbeitung nach einem der Ansprüche 1 - 4, dadurch gekennzeichnet, daß die Größe der Überhöhung (h) der konvexen bzw. konkaven Zentralbereiche (4b;5b) der ersten und zweiten Anlageflächen (4;5) in einem Bereich zwischen 1/5 und 1/10 des Durchmesserbetrages des konvexen Zentralbereiches (4b) der Anlagefläche (4) liegt.

6. Werkzeug für die Hochgeschwindigkeitsbearbeitung nach einem der Ansprüche 1 - 5, dadurch gekennzeichnet, daß die Schneideinsätze (2) ein Mittelloch (6) aufweisen und über Klemmschrauben (7) mit dem Werkzeuggrundkörper (3) oder der Werkzeugkassette befestigt sind, wobei die Längsachse (8) des Mittelloches (6) und die Längsachse (10) der Gewindebohrung (9) im Werkzeuggrundkörper (3) unter einem Winkel α gegeneinander geneigt sind.

## Claims

1. Rotating cutting tool (1) for high-speed machining with one or more interchangeable cutting inserts (2), fixed to a tool base body (3) or a tool magazine, and with a first and a second contact surface (4; 5) located on the tool base body (3) and on the cutting insert (2), with a convex or concave central region (4b; 5b) for absorbing the centrifugal forces caused by the tool base body (3) occurring at the cutting inserts (2), characterised in that flat edge regions (4a; 5a) border the central region on at least one side and that, viewed in the section perpendicular to the axis of the tool, the tool base body (3) and the cutting insert (2) are in contact with one another at three contact points on both contact surfaces (4; 5), two contact points lying within the central regions (4b; 5b) and the third contact point lying within the flat edge regions (4a; 5a) and that the convex central region (4b) of the first contact surface (4), at least in the region of the two contact points, is the segment of the lateral surface of a regular cylinder which extends at least approximately in the direction of the axis of rotation over the entire central region (4b).

2. Tool for high-speed machining according to claim 1, characterised in that the two contact points lie within the convex central region (4b) as well as in the direct transition between the concave central region (5b) and the flat edge regions (5a).

3. Tool for high-speed machining according to claim 1 or 2, characterised in that the central region (5b) of the second contact surface (5) is also the segment of the lateral surface of a regular cylinder, the radius of the lateral surface being smaller than the radius of the lateral surface of the convex central region (4b) of the first contact surface (4).

4. Tool for high-speed machining according to one of claims 1 - 3, characterised in that the convex central region (4b) of the first contact surface (4) is provided on the cutting inserts (2).

5. Tool for high-speed machining according to one of claims 1 - 4, characterised in that the size of the raised portion (h) of the convex or concave central regions (4b; 5b) of the first and second contact surfaces (4; 5) lies in a range between 1/5 and 1/10 of the total diameter of the convex central region (4b) of the contact surface (4).

6. Tool for high-speed machining according to one of claims 1 - 5, characterised in that the cutting inserts (2) have a central hole (6) and are fixed to the tool base body (3) or the tool magazine via locking screws (7), the longitudinal axis (8) of the central hole (6) and the longitudinal axis (10) of the threaded bore (9) in the tool base body (3) being inclined with respect to one another at an angle α.

## Revendications

1. Outil rotatif d'enlèvement de copeaux (1) pour l'usinage à haute vitesse comprenant un ou plusieurs inserts de coupe (2) interchangeables fixés sur un corps de base (3) d'outil ou sur une cassette d'outils et comprenant une première et une deuxième surfaces d'appui (4; 5) se trouvant sur le corps de base (3) d'outil et sur l'insert de coupe (2), présentant une zone centrale convexe ou concave (4b; 5b) afin que le corps de base (3) d'outil absorbe les forces centrifuges apparaissant sur les inserts de coupe (2),
**caractérisé en ce que**
des zones de bord planes (4a; 5a) sont adjacentes, au moins sur un côté, à la zone centrale et que le corps de base (3) et l'insert de coupe (2) sont en contact l'un avec l'autre sur les deux surfaces d'appui (4; 5), selon la vue en coupe perpendiculaire à l'axe de l'outil, en trois points d'appui, deux points d'appui se trouvant à l'intérieur des zones centrales (4b; 5b) et le troisième point d'appui se trouvant à l'intérieur des zones de bord planes (4a; 5a), et en ce que la zone centrale convexe (4b) de la première surface d'appui (4) est, au moins dans la zone des deux points d'appui, la section de la surface d'enveloppe d'un cylindre circulaire qui s'étend sur toute la zone centrale (4b) au moins à peu près dans la direction de l'axe de rotation.

2. Outil d'usinage à haute vitesse selon la revendication 1, caractérisé en ce que les deux points d'appui sont situés à l'intérieur de la zone centrale convexe (4b) ainsi que dans le raccord immédiat entre la zone centrale concave (5b) et les zones de bord planes (5a).

3. Outil d'usinage à haute vitesse selon la revendication 1 ou 2, caractérisé en ce que la zone centrale concave (5b) de la deuxième surface d'appui (5) est elle-aussi la section de la surface d'enveloppe d'un cylindre circulaire, le rayon de la surface d'enveloppe étant plus petit que le rayon de la surface d'enveloppe de la zone centrale convexe (4b) de la première surface d'appui (4).

4. Outil d'usinage à haute vitesse selon l'une des revendications 1 à 3, caractérisé en ce que la zone centrale convexe (4b) de la première surface d'appui (4) est réalisé sur les inserts de coupe (2).

5. Outil d'usinage à haute vitesse selon l'une des revendication 1 à 4, caractérisé en ce que la dimension de la surélévation (h) des zones centrales convexes ou concaves (4b; 5b) de la première et de la deuxième surfaces d'appui (4; 5) est dans une plage comprise entre 1/5 et 1/10 de la valeur du diamètre de la zone centrale convexe (4b) de la surface d'appui (4).

6. Outil d'usinage à haute vitesse selon l'une des revendications 1 à 5, caractérisé en ce que les inserts de coupe (2) comportent un trou central (6) et sont fixés par des vis de serrage (7) au corps de base (3) de l'outil ou à la cassette d'outils, l'axe longitudinal (8) du trou central (6) et l'axe longitudinal (10) de l'alésage fileté (9) ménagé dans le corps de base (3) de l'outil étant inclinés d'un angle α l'un par rapport à l'autre.
